# FASCICULE DE BREVET EUROPEEN

(11) **EP 3 329 447 B1**
(45) Date de publication et mention de la délivrance du brevet: **17.02.2021**
(21) Numéro de dépôt: 16750988.4
(22) Date de dépôt: 25.07.2016
(51) Int. Cl.: G06Q 10/08, G06F 16/23

(54) **PROCÉDÉ DE MISE À JOUR DE DONNÉES D'ASSOCIATION ENTRE DES ARTICLES ET DES EMPLACEMENTS**
VERFAHREN ZUR AKTUALISIERUNG VON ZUORDNUNGSDATEN ZWISCHEN ARTIKELN UND STANDORTEN
METHOD FOR UPDATING ASSOCIATION DATA BETWEEN ARTICLES AND LOCATIONS

(30) Priorité: 27.07.2015 FR 1557153
(43) Date de publication de la demande: 06.06.2018
(73) Titulaire: SES-imagotag, 92000 Nanterre (FR)
(72) Inventeur: BOTTINE, Philippe, 92100 Boulogne-Billancourt (FR); ROBIN, François, 75116 Paris (FR)
(74) Mandataire: Regimbeau
(86) Numéro de dépôt international: PCT/FR2016/051930
(87) Numéro de publication internationale: WO 2017/017366

(56) Documents cités:
- US-A1- 2013 173 435
- US-A1- 2015 088 701
- US-A1- 2015 178 767

## Description

La présente invention concerne l'association entre des articles d'une surface de vente et des emplacements de ladite surface de vente.

L'affichage d'informations relatives à des articles présentés à la vente dans une surface de vente se fait généralement au moyen d'étiquettes affichant notamment le prix de l'article auquel une étiquette est associée, ainsi que d'autres informations telles que le prix au poids, etc...

La nécessité de disposer d'un affichage d'informations à jour a justifié l'implantation dans de nombreuses surfaces de vente d'étiquettes électroniques de gondole, plus commodément désignées par leur acronyme EEG, disposant d'un écran sur lequel l'affichage d'informations est commandé à distance.

L'utilité de tels systèmes est essentiellement de permettre, au niveau des rayonnages d'une surface de vente telle qu'un supermarché, hypermarché ou toute autre surface de vente, de présenter au consommateur, pour chaque article présenté à la vente, un prix correspondant de façon fiable au prix tel qu'il figure dans le fichier central du site, c'est-à-dire au prix tel qu'il sera effectivement utilisé en caisse pour le paiement de l'article.

Un autre avantage de ces systèmes connus est de permettre de réaliser des changements de prix automatisés dans des délais beaucoup plus courts qu'avec un affichage manuel, que ce soit pour des périodes particulières de promotion sur le site, pour tout ou partie des articles présentés à la vente, pour répercuter des changements de tarifs, pour faire face à des situations d'inflation où les prix doivent être augmentés très fréquemment, etc...

Les capacités de communications des EEG ont récemment été amplifiées en les munissant d'un périphérique radiofréquence à courte portée, de type NFC (acronyme de l'anglais Near Field Communication pour communication en champ proche) ou RFID (acronyme de l'anglais Radio Frequency Identification pour identification radiofréquence), afin de tirer parti de l'équipement des clients des surfaces de ventes en terminaux mobile de communication intelligents. Un exemple courant d'un tel terminal mobile est un téléphone portable de type smartphone, qui offre à la fois des possibilités de connexion et de traitement d'informations appropriées.

De fait, l'interaction entre l'EEG et le terminal du client permet d'offrir à celui-ci de nouveaux services, tels que l'affichage d'informations supplémentaires sur le produit auquel est associée l'EEG. La demande de brevet WO2013/153290 décrit une exploitation particulièrement avantageuse de ces capacités de communication, en permettant de transmettre au terminal mobile du client des informations spatialement localisées associée à la localisation dudit terminal mobile. Le terminal mobile est localisé grâce à l'identification et la localisation d'au moins une étiquette de gondole avec lequel le terminal mobile entre en communication. Une telle localisation permet d'obtenir une très grande précision, de l'ordre de quelques centimètres, tandis que les procédés de géolocalisation à base de triangulation intérieur à partir de balises émettant un signal radio ne permettent au mieux qu'une précision de l'ordre du mètre, ce qui empêche de savoir devant quel produit se trouve le client, et restreint donc fortement les possibilités d'interactions basées sur la localisation.

Cependant, la localisation du terminal mobile à partir des EEG suppose une connaissance précise et correcte de l'emplacement desdites EEG. La disposition d'une surface de vente est normalement décrite par un planogramme. Un planogramme est un ensemble de données d'association entre des articles d'une surface de vente et des emplacements de ladite surface de vente. Le planogramme établit quels produits doivent être à telle hauteur, sur quelles étagères et sur combien de mètres linéaires.

Or, les planogrammes actuellement utilisés sont des visions théoriques de ce que devrait être la surface de vente. En effet, ils sont typiquement définis de façon générique, pour une pluralité de magasins de taille similaire, pour lesquels le même agencement et le même achalandage est prévu. De fait, l'agencement d'une surface de vente donnée est effectué sur la base du planogramme théorique correspondant à la taille de la surface de vente. Dans les faits, la réalité de l'organisation de la surface de vente s'écarte de manière non négligeable de ce planogramme théorique. En effet, il est courant que de l'ordre de 10 à 15 % des articles présents dans la surface de vente ne se retrouvent pas sur le planogramme, par exemple parce que ces articles sont propres à la surface de vente, et n'ont pas été intégrés au planogramme conçu pour un ensemble de surfaces de vente. En outre, la disposition des articles dans la surface de vente peut varier au fil du temps, en raison des décalages de produits et des adaptations effectuées par les opérateurs de la surface de vente, par exemple pour des produits saisonniers comme ceux proposés uniquement à Noël ou à la rentrée des classes.

Il en résulte que le planogramme n'est jamais conforme à la réalité, et que la localisation faisant appel à ce planogramme pâtit de l'incapacité du planogramme à refléter la réalité. Mais l'inexactitude du planogramme présente d'autres inconvénients, notamment au niveau de la gestion des stocks et d'autres aspects commerciaux, puisque le planogramme est par exemple utilisé pour estimer les quantités d'articles sur les gondoles, sur la base de l'étendue théorique de leur présence, qui, erronée, peut mener à des ruptures de stock non anticipées.

La demande de brevet américain publiée sous le numéro US 2013/173435 A1 décrit un procédé de mise à jour de données d'association entre des articles d'une surface de vente et des emplacements dans les rayons de la surface de vente. Au cours de ce procédé, un utilisateur scanne plusieurs produits à la suite, et les numéros de produits sont transmis à un serveur. Toutefois, les emplacements déterminés sont peu fiables dans la mesure où les étiquettes lues par le terminal mobile sont attachées aux emballages de produits, et sont donc susceptibles d'être déplacées par les clients. De plus, le procédé proposé est peu pratique en cas de rupture de stock de certains produits dans les rayonnages. Enfin, ce document ne propose pas de solution pour connaître l'espacement entre les produits dans un même rayon de la surface de vente.

### PRESENTATION DE L'INVENTION

Un but général de l'invention est de pallier tout ou partie des défauts des dispositifs de liaison de l'art antérieur, en proposant un procédé permettant de maintenir le planogramme à jour et conforme à la disposition réelle des produits dans la surface de vente.

A cet effet, il est proposé un procédé de mise à jour d'un planogramme représentatif d'une surface de vente, le planogramme comprenant des données d'association entre des articles de ladite surface de vente et des emplacements de ladite surface de vente, ladite surface de vente présentant une pluralité d'étiquettes de gondole réparties dans ladite surface de vente, chacune desdites étiquettes de gondole étant associée à un article et étant disposée à proximité d'un emplacement associé audit article, chacune desdites étiquettes de gondole étant munie d'un identifiant d'étiquette qui lui est propre,
une étiquette ajoutée à une gondole étant considérée comme une étiquette à localiser, ledit procédé comprenant les étapes selon lesquelles, pour localiser au moins l'étiquette à localiser,
- un dispositif de lecture mobile acquiert une séquence d'identifiants d'étiquette comprenant l'identifiant d'étiquette de l'étiquette à localiser et comprenant en outre l'identifiant d'étiquette d'une étiquette adjacente par rapport à l'étiquette à localiser dans une direction de défilement des emplacements de la surface de vente, l'étiquette adjacente étant l'étiquette précédente selon la direction de défilement ou étant l'étiquette suivante selon la direction de défilement,
   le dispositif de lecture mobile comprenant un organe de mesure de déplacement, l'acquisition de la séquence d'identifiants comprenant une détermination d'un déplacement du dispositif de lecture mobile entre l'étiquette électronique de gondole dont l'emplacement est connu et l'étiquette électronique de gondole à localiser,
   l'emplacement de l'étiquette adjacente étant connu,
- le dispositif de lecture mobile transmet la séquence d'identifiants d'étiquette à un système informatique,
- le système informatique met à jour le planogramme à partir de la séquence d'identifiants d'étiquettes, en déterminant :
   les articles associés aux étiquettes de la séquence d'étiquettes,
   les emplacements respectifs desdits articles, à partir de l'ordre des étiquettes dans la séquence d'étiquettes, un emplacement de l'étiquette à localiser étant déterminé en fonction de l'emplacement connu de l'étiquette adjacente et en fonction d'une distance entre l'étiquette électronique de gondole dont l'emplacement est connu et l'étiquette électronique de gondole à localiser, ladite distance étant déterminée à partir du déplacement du dispositif de lecture mobile.

Ce procédé est avantageusement complété par les caractéristiques suivantes, prises seules ou en une quelconque de leurs combinaisons techniquement possibles :
- l'acquisition de la séquence d'identifiants d'étiquette comprend le renseignement par un opérateur du dispositif de lecture, d'une indication de positionnement relatif par rapport à l'emplacement de l'étiquette ajoutée de l'étiquette adjacente dont l'emplacement est connu du système informatique, ladite indication de positionnement relatif étant transmise par le dispositif de lecture au système informatique;
- le sens de défilement des emplacements de la surface de vente est connu, et une indication de positionnement relatif, par rapport à l'emplacement de l'étiquette localisée, de l'étiquette adjacente dont l'emplacement est connu du système informatique, est déduite de l'ordre d'acquisition des identifiants d'étiquette de la séquence d'identifiants d'étiquette;
- le dispositif de lecture transmet au système informatique des données relatives à l'association entre l'identifiant de l'étiquette électronique ajoutée et la référence d'un article auquel est associée ladite étiquette électronique ajoutée;
- plusieurs étiquettes électroniques de gondole sont ajoutées, lesdites étiquettes électroniques de gondole ajoutées étant adjacentes les unes aux autres dans une direction de défilement des emplacements de la surface de vente, et l'acquisition de la séquence d'identifiants d'étiquette par le dispositif de lecture comprend l'acquisition des identifiants d'étiquette desdites étiquettes électroniques de gondole ajoutées dans l'ordre de leur disposition par rapport à l'étiquette électronique de gondole dont l'emplacement est connu;
- chaque étiquette électronique de gondole de ladite séquence est munie d'un périphérique radiofréquence et le dispositif de lecture acquiert l'identifiant desdites étiquettes électroniques de gondole en établissant une communication par radiofréquence avec lesdites étiquettes électroniques de gondole;
- le procédé comprend les étapes selon lesquelles:
   - le dispositif de lecture acquiert un identifiant d'étiquette d'une étiquette électronique de gondole,
   - une caractéristique de dimension de l'emplacement associé à l'étiquette électronique de gondole est renseignée dans le dispositif de lecture,
   - ladite caractéristique de dimension de l'emplacement est transmise avec l'identifiant d'étiquette au système informatique de traitement.

L'invention concerne également un produit programme d'ordinateur comprenant des instructions de code de programme pour l'exécution du procédé selon l'invention, lorsque ledit programme est exécuté sur un ordinateur.

L'invention concerne également un système de gestion d'un planogramme représentatif d'une surface de vente, le planogramme comprenant des données d'association entre des articles de ladite surface de vente et des emplacements de ladite surface de vente, le système comprenant :
- une pluralité d'étiquettes électroniques de gondole, chacune desdites étiquettes de gondole étant associée à un identifiant d'étiquette qui lui est propre,
- un dispositif de lecture mobile, adapté pour acquérir les identifiants d'étiquette de ladite pluralité d'étiquettes électroniques de gondole et les références des articles associés auxdites étiquettes électroniques de gondole,
- un système informatique, configuré pour stocker le planogramme, et configuré pour recevoir du dispositif de lecture les identifiants d'étiquette acquis par ledit dispositif de lecture,
   ledit système de gestion étant adapté pour mettre en œuvre le procédé tel que défini ci-avant, et dans lequel
- le dispositif de lecture mobile est configuré pour acquérir une séquence d'identifiants d'étiquette comprenant au moins deux identifiants d'étiquettes dont les étiquettes électroniques de gondoles sont adjacentes dans une direction de défilement des emplacements de la surface de vente, une desdites étiquettes électroniques de gondoles adjacentes étant ladite étiquette électronique de gondole à localiser, et une autre desdites étiquettes électroniques de gondoles adjacentes étant une étiquette électronique de gondole dont l'emplacement est connu,
   le dispositif de lecture mobile comprenant un organe de mesure de déplacement, ledit organe étant configuré pour déterminer un déplacement du dispositif de lecture mobile entre l'étiquette électronique de gondole dont l'emplacement est connu et l'étiquette électronique de gondole à localiser,
- le dispositif de lecture mobile est configuré en outre pour transmettre la séquence d'identifiants d'étiquette au système informatique,
- le système informatique est configuré pour mettre à jour le planogramme à partir de la séquence d'identifiants d'étiquettes, en déterminant
   - les articles associés aux étiquettes de la séquence d'étiquettes,
   - les emplacements respectifs desdits articles, à partir de l'ordre des étiquettes dans la séquence d'étiquettes et à partir d'une distance entre l'étiquette électronique de gondole dont l'emplacement est connu et l'étiquette électronique de gondole à localiser, ladite distance étant déterminée à partir du déplacement du dispositif de lecture mobile.

### PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:
- la figure 1 illustre est un schéma illustrant un système selon un mode de réalisation possible de l'invention,
- les figures 2, 3 et 4 sont des exemples de menus affichés par le dispositif de lecture dans le cadre de la mise en œuvre de l'invention selon un mode de réalisation possible,

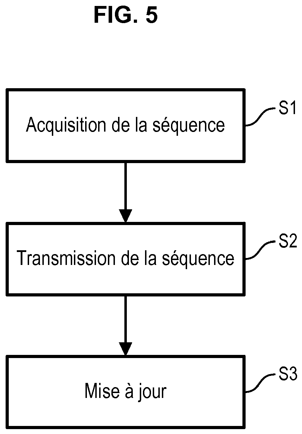

- la figure 5 est un schéma illustrant différentes étapes du procédé selon un mode de réalisation possible de l'invention.

### DESCRIPTION DETAILLEE

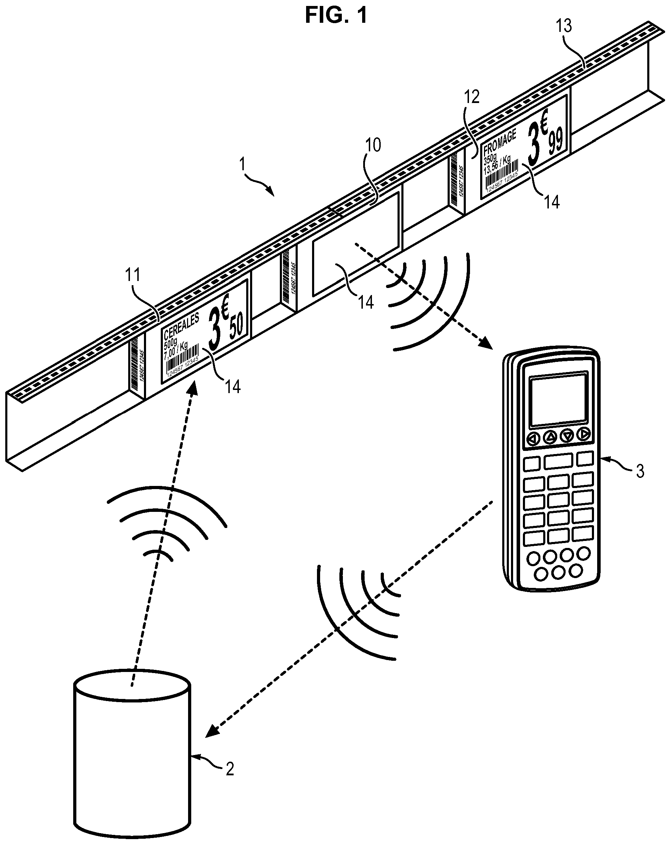

Sur la figure 1 est représenté, dans un but illustratif et non limitatif, un système de communication de données correspondant à un mode de réalisation possible de l'invention, comprenant un dispositif de lecture 3, un serveur central 2 et une séquence 1 d'étiquettes électroniques de gondole (EEG).

Le dispositif de lecture 3 est apte à communiquer avec un serveur central 2. Ce dispositif de lecture 3 est de préférence muni de moyens d'affichage d'informations, tel qu'un écran, à destination d'un utilisateur dudit dispositif de lecture 1, et de moyens d'entrée comme un clavier, des boutons, et/ou un écran tactile. La communication entre le dispositif de lecture 3 et le serveur central 2 peut être établi au moyen de tout réseau de communication au moins partiellement sans fil, notamment via un réseau sans fil de type DECT, WIFI ou 3G. Ainsi la communication peut être établie en passant par le réseau internet auquel est relié le serveur central 2.

Les EEG sont réparties dans la surface de vente. Les EEG présentent une forte densité spatiale, typiquement une dizaine d'étiquettes par mètres carrés en moyenne, avec cependant une variabilité importante. Chaque EEG est identifiée par un unique identifiant d'étiquette qui lui est propre. Cette identifiant d'étiquette permet donc d'identifier de manière univoque une seule et unique EEG de la surface de vente. Chacune desdites étiquettes de gondole est associée à un article et est disposée à proximité d'un emplacement associé audit article.

Sur la figure 1 est illustrée une séquence 1 d'EEG 10, 11, 12 mis en place le long d'un rail 13 de gondole de présentation d'articles. Une telle EEG comporte un écran d'affichage 14 pour l'affichage d'informations relatives à un article auquel elle est associée. Typiquement, ces informations comprennent le prix de l'article, et d'autres informations habituellement disponibles dans une surface de vente, par exemple le prix par kilogramme pour un produit alimentaire. L'EEG comporte également un boîtier en plastique à l'intérieur duquel sont logés les constituants fonctionnels de l'EEG.

Notamment, l'étiquette électronique comporte un module de communication radiofréquence pour recevoir des données représentatives d'informations relatives à un article en provenance d'une station centrale reliée au système informatique 2, une mémoire pour stocker lesdites données, et un microcontrôleur pour commander l'affichage des informations relatives à l'article. Ces différents constituants fonctionnels sont disposés sur une carte de circuit imprimé logée dans le boîtier. L'EEG comporte également un périphérique radiofréquence avec lequel le dispositif de lecture 3 peut établir une communication pour acquérir l'identifiant d'étiquette de ladite EEG. De fait, le dispositif de lecture 3 est adapté pour établir une communication sans fil avec l'EEG.

Le périphérique radiofréquence de l'étiquette électronique comprend une antenne et une puce électronique de type NFC (acronyme de l'anglais Near Field Communication pour communication en champ proche) ou RFID (acronyme de l'anglais Radio Frequency Identification pour identification radiofréquence). Un périphérique radiofréquence de type NFC fonctionne par exemple avec une fréquence de 13,56 Mhz comme un périphérique radiofréquence de type RFID HF.

Le serveur central 2 comprend des moyens informatiques de traitement incluant au moins un processeur et une mémoire dans laquelle sont stockées des données d'associations relatives à l'association entre des articles d'une surface de vente et des emplacements de ladite surface de vente, lesdites données d'association constituant le planogramme.

La mémoire du serveur central 2 stocke également des données relatives à l'association entre l'identifiant d'étiquette et un emplacement de la surface de vente qui correspond à la localisation de l'EEG identifiée par ledit identifiant, ainsi qu'à l'article auquel est associé l'EEG. Ainsi, grâce à l'identifiant d'étiquette, on peut retrouver l'emplacement de l'EEG identifiée par ledit identifiant et l'article auquel elle se rapporte.

Le procédé permet de mettre à jour les données d'association entre des articles d'une surface de vente et des emplacements de ladite surface de vente. En cas de changement dans l'association d'un article avec l'EEG au niveau d'un emplacement, par exemple lorsqu'un article est substitué à un autre au même emplacement, il suffit à l'opérateur effectuant le changement d'article d'acquérir successivement l'identifiant de l'EEG correspondant à cet emplacement, et la référence de l'article correspondant audit emplacement, et d'envoyer au système informatique des données relatives à l'association entre l'identifiant l'EEG et la référence de l'article. Les données envoyées au système informatique sont utilisées pour mettre à jour les données d'association entre les articles de la surface de vente et les emplacements de ladite surface de vente, c'est-à-dire le planogramme, puisque l'emplacement de l'EEG peut être retrouvé au moyen de l'identifiant d'étiquette de celle-ci.

La problématique de la mise à jour du planogramme se pose notamment lorsque l'agencement des EEG est modifié, en raison du déplacement d'une EEG, et plus précisément lorsqu'une séquence d'EEG doit être modifiée par l'ajout d'au moins une étiquette, dans la mesure où l'enlèvement d'une étiquette ne requiert que la suppression des données qui y sont associées. Il est alors nécessaire de connaître l'emplacement de l'EEG déplacée, dont l'emplacement est inconnu. Il s'agit donc d'une EEG à localiser par rapport aux autres EEG dans la surface de vente, pour remettre à jour le planogramme.

Le procédé propose ainsi la mise à jour de données d'association entre des articles d'une surface de vente et des emplacements de ladite surface de vente lors du déplacement d'au moins une EEG, par le biais de l'acquisition, par le dispositif de lecture 3, d'au moins deux identifiants d'étiquette dont les EEG sont adjacentes, dans une direction de défilement des emplacements de la surface de vente, et dont l'un des identifiants correspond à l'EEG à localiser, et l'autre à une EEG dont l'emplacement est connu.

A titre illustratif, la présente invention est décrite en détail dans le cadre de l'ajout d'une EEG. C'est la configuration qui est illustrée par la figure 1. En choisissant un sens de lecture des étiquettes électroniques de la gauche vers la droite sur la figure 1, l'étiquette ajoutée 10 est l'étiquette centrale, encadrée par l'étiquette précédente 11 et l'étiquette suivante 12. Il est à noter que la mise en place physique de l'EEG 10 à son emplacement peut être effectuée avant ou après le procédé qui va être décrit.

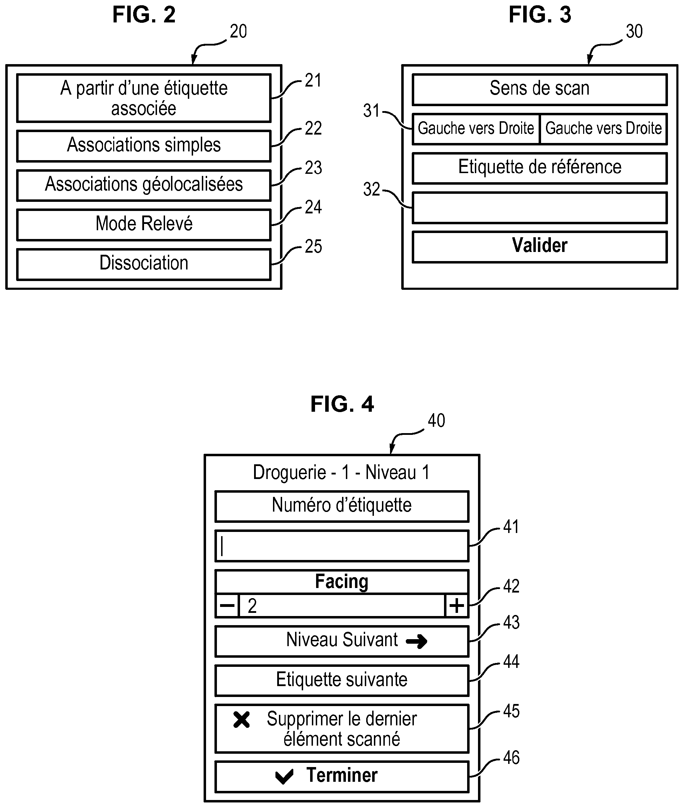

La figure 2 illustre un exemple non limitatif de menu 20 qui peut être présenté par le dispositif de lecture 3. Plusieurs possibilités sont offertes à l'opérateur. Une première fonctionnalité 21 dite "A partir d'une étiquette associée" consiste à localiser une EEG à localiser au moyen d'une EEG associée dont l'emplacement est connu. Une deuxième fonctionnalité 22 dite "Association simple" consiste à associer une EEG dont l'emplacement est connu avec un article en en acquérant un identifiant d'article. Une troisième fonctionnalité 23 dite "Associations géolocalisées" consiste à associer une EEG à un emplacement en renseignant manuellement l'emplacement. Une quatrième fonctionnalité 24 dite "Mode relevé" consiste à localiser séquentiellement plusieurs EEG à localiser. Enfin, une cinquième fonctionnalité 25 dite "Dissociation" consiste à dissocier une EEG d'un article.

Dans la suite, on s'intéresse plus particulièrement à la première fonctionnalité 21 et à la quatrième fonctionnalité 24. Dans le cadre de la première fonctionnalité 21, une fois que l'opérateur a choisi celle-ci, un autre menu 30 tel que celui de la figure 3 lui est présenté. Afin de déterminer l'emplacement de l'EEG ajoutée 10, l'acquisition de la séquence d'identifiants d'étiquette comprend le renseignement par un opérateur du dispositif de lecture 3, d'une indication de positionnement relatif d'une étiquette adjacente 11 ou 12, dont l'emplacement est déjà connu, par rapport à l'étiquette ajoutée 10.

L'opérateur utilise le dispositif de lecture 3 pour acquérir (étape S1) un identifiant d'étiquette d'une EEG adjacente 11 ou 12 à l'emplacement de l'EEG ajoutée 10, emplacement qui peut être soit déjà occupée par l'EEG ajoutée 10 soit destiné à recevoir l'EEG ajoutée 10. Ainsi, l'EEG dont l'identifiant d'étiquette est acquis est l'EEG précédente 11 ou l'EEG suivante 12. Comme indiqué plus haut, cette acquisition se fait de préférence par communication sans fil de type NFC. Cette EEG adjacente devient l'étiquette de référence, dont l'identifiant apparaît dans le cadre 32 du menu 30.

L'opérateur indique également une indication de positionnement relatif de l'étiquette adjacente par rapport à l'étiquette ajoutée 10 (étape S3). Dans l'exemple de la figure 3, c'est le sens de défilement, en choisissant dans le menu 30 un sens de scan 31 : de la gauche vers la droite ou de la droite vers la gauche. L'opérateur indique donc si l'EEG dont l'identifiant vient d'être acquis est l'EEG précédente 11 ou l'EEG suivante 12 en sélectionnant le champ adéquat, puis il valide son indication.

Le dispositif de lecture 3 peut également proposer à l'opérateur un menu lui donnant le choix,, entre la désignation de l'EEG dont l'identifiant vient d'être acquis en tant qu'EEG précédente ou EEG suivante afin de renseigner l'indication de positionnement relatif de l'étiquette adjacente par rapport à l'étiquette ajoutée 10.

Il est possible de renseigner l'indication de positionnement relatif de l'EEG adjacente dont l'emplacement est connu par rapport à l'emplacement de l'EEG ajoutée 10 avant ou après l'acquisition de l'identifiant d'étiquette de ladite EEG adjacente dont l'emplacement est connu.

L'opérateur utilise le dispositif de lecture 3 pour acquérir l'identifiant d'étiquette de l'EEG ajoutée 10, de préférence par communication sans fil de type NFC, puis renseigne éventuellement la référence de l'article destiné à être associé avec ladite étiquette associée, si celle-ci n'est pas encore associée avec ledit article. Cette étape peut également être effectuée avant ou après l'acquisition de l'identifiant d'étiquette de ladite EEG adjacente dont l'emplacement est connu et/ou le renseignement de l'indication de positionnement relatif de l'EEG adjacente dont l'emplacement est connu par rapport à l'emplacement de l'EEG ajoutée 10.

Différentes possibilités sont possibles pour renseigner la référence de l'article. La plus courante consiste en un scannage d'un code-barres de l'article, lequel encode généralement la référence de l'article. Le dispositif de lecture 3 est à cet effet pourvu d'un lecteur de code-barres. Alternativement, l'opérateur peut rentrer manuellement la référence à l'aide des moyens d'entrée du dispositif de lecture, incluant un clavier, réel ou virtuel. Si l'article est pourvu d'un périphérique radiofréquence tel qu'une puce RFID, le dispositif de lecture 3 peut acquérir la référence de l'article en établissant une communication avec ledit périphérique radiofréquence.

Le dispositif de lecture 3 transmet (étape S2) au système informatique 2 la séquence d'identifiants d'étiquette comprenant l'identifiant de l'étiquette adjacente 11, 12 et l'identifiant d'étiquette de l'EEG ajoutée 10. Le dispositif de lecture 3 transmet également l'indication de positionnement relatif de ladite EEG adjacente 11 ou 12 par rapport à l'EEG ajoutée 10. Les données relatives à l'association entre l'identifiant de l'EEG ajoutée 10 et la référence d'un article auquel est associée ladite EEG ajoutée 10 peuvent également être transmis.

Bien que la description ci-dessus, pour des raisons de simplicité, ne traite que de la localisation d'une EEG à la fois, il est possible de localiser plusieurs EEG adjacentes les unes aux autres dans une direction de défilement des emplacements de la surface de vente. Il s'agit de la quatrième fonctionnalité dite "Mode relevé" du menu 20 de la figure 2. Dans ce cas, l'acquisition de la séquence d'identifiants d'étiquette par le dispositif de lecture comprend l'acquisition des identifiants d'étiquette desdites étiquettes électroniques de gondole ajoutées dans l'ordre de leur disposition dans la direction de défilement.

Plus précisément, l'opérateur utilise le dispositif de lecture 3 pour acquérir un identifiant d'étiquette d'une EEG adjacente à l'emplacement de l'EEG ajoutée, emplacement qui peut être soit déjà occupée par l'EEG ajoutée 10 soit destiné à recevoir l'EEG ajoutée 10. Ainsi, l'EEG dont l'identifiant d'étiquette est acquis est l'EEG précédente 11 ou l'EEG suivante 12.

Une indication de positionnement relatif de l'EEG adjacente par rapport à l'EEG ajoutée 10 est ensuite déterminée. A cet égard, l'opérateur peut renseigne l'indication de positionnement relatif par rapport à l'EEG ajoutée 10 de l'EEG adjacente 11 ou 12 dont l'emplacement est connu du système informatique, ladite indication de positionnement relatif étant transmise par le dispositif de lecture au système informatique. Cette EEG 11 ou 12 dont l'emplacement est connu sert donc de référence pour les emplacements des EEG ajoutées 10. L'indication de positionnement relatif peut également être déduite par le fait que le sens du défilement du dispositif de lecture 3 devant les EEG est prédéfini. L'ordre chronologique des références acquises détermine ainsi les positionnements relatifs des EEG auxquelles appartiennent ces références.

L'opérateur acquiert ensuite les identifiants des EEG ajoutées 10 dans l'ordre, en termes de proximité, de la disposition des emplacements des EEG ajoutées par rapport à l'EEG 11 ou 12 dont l'emplacement est connu du système informatique. Ainsi, en cas d'ajout de deux EEG entre les EEG 11 ou 12, dont l'emplacement est connu, l'opérateur acquiert l'identifiant par exemple de l'EEG précédente 11, puis indique le sens de déplacement, ou qu'il s'agit de l'EEG précédent les emplacements des EEG ajoutées 10. L'opérateur acquiert ensuite l'identifiant d'étiquette de l'EEG la plus proche de l'EEG 11, puis de celle la plus éloignée de l'EEG 11.

Il est à noter que l'information de positionnement relatif transmise au système informatique 2 peut comprendre une distance relative entre l'EEG dont l'emplacement est connu et l'EEG à localiser 10. Cette distance peut être acquise par la mesure du déplacement du dispositif de lecture 3 entre le moment où il acquiert l'identifiant de l'EEG dont l'emplacement est connu et le moment où il acquiert l'identifiant de l'EEG à localiser. A cette effet, le dispositif de lecture 3 comprend un organe de mesure de déplacement, et le procédé comprend la détermination du déplacement du dispositif de lecture 3 entre l'acquisition de l'identifiant de l'étiquette électronique de gondole dont l'emplacement est connu et l'acquisition de l'identifiant de l'étiquette électronique de gondole à localiser.

Par exemple, le dispositif de lecture 3 peut être muni d'un accéléromètre, permettant de déterminer par intégration le déplacement dudit dispositif de lecture 3 entre les deux acquisitions, et donc d'en déduire la distance. La connaissance de cette distance permet de reporter fidèlement le positionnement relatif de l'EEG à localiser par rapport à l'EEG dont l'emplacement est connu. Il est également possible de considérer comme EEG dont l'emplacement est connu une EEG factice, c'est-à-dire non associée à un article, constituant un repère de référence pour localiser les autres EEG. C'est par exemple le cas d'une EEG placée à une extrémité d'une gondole pour repérer celle-ci.

Les informations acquises par le dispositif de lecture 3, à savoir les identifiants d'étiquette, les informations de positionnement relatif, et éventuellement les données d'association entre les articles de la surface de vente et les EEG, sont transmises au système informatique 2, de préférence au moyen d'une connexion sans fil.

Le système informatique 2 reçoit donc ces informations, et s'en sert pour mettre à jour (étape S3) les données d'association entre les articles de la surface de vente et les emplacements de ladite surface de vente, c'est-à-dire le planogramme. Au moyen de la séquence d'identifiants d'étiquette, le système informatique détermine l'emplacement de l'EEG ajoutée 10. A partir de la référence de l'article transmise par le dispositif de lecture 3 en même temps que l'identifiant d'étiquette de l'EEG ajoutée 10, le système informatique 2 détermine également l'article associé à l'EEG ajoutée 10. Comme il y a correspondance entre l'emplacement de l'article associé à l'EEG ajoutée 10 et l'emplacement de ladite EEG ajoutée 10, le système informatique détermine en même temps l'emplacement de l'article associé à l'EEG ajoutée 10. Le planogramme est alors modifié pour qu'à cet emplacement corresponde ledit article.

Le planogramme présente de préférence un référencement des emplacements de la surface de vente prenant la forme d'un cadastre, avec une localisation desdits emplacements au moyen d'un référentiel ou d'un ensemble de coordonnées représentatives de l'organisation spatiale de la surface de vente. Par exemple, une première coordonnée peut désigner le rayon de la surface de vente, tandis qu'une deuxième peut désigner une section de la gondole, une troisième l'étage de la gondole, et une quatrième l'ordre de l'emplacement sur cet étage. Une section de la gondole peut notamment être définie comme étant l'étendue de la gondole sur laquelle les étages sont continus. Une rupture dans l'étagement signifie donc le passage à une autre section.

Ainsi, à chaque emplacement est associé une EEG, et un article. Toute modification de l'agencement des emplacements des EEG entrainant un ajout ou un retrait d'EEG, cette modification est immédiatement relayée au système informatique 2, et intégrée dans le planogramme. De même, en cas de changement dans l'association d'un article avec l'EEG au niveau d'un emplacement, par exemple lorsqu'un article est substitué à un autre au même emplacement, il suffit alors à l'opérateur effectuant le changement d'article d'acquérir successivement l'identifiant de l'EEG correspondant à cet emplacement, et la référence de l'article correspondant audit emplacement, et d'envoyer au système informatique des données relatives à l'association entre l'identifiant l'EEG et la référence de l'article, comme expliqué lors de l'ajout d'une EEG. Il n'est cependant alors pas nécessaire d'acquérir l'identifiant d'une EEG adjacente dans la mesure où l'agencement des EEG n'a pas été modifié.

Les données envoyées au système informatique sont utilisées pour mettre à jour les données d'association entre les articles de la surface de vente et les emplacements de ladite surface de vente, c'est-à-dire le planogramme, puisque l'emplacement de l'EEG peut être retrouvé au moyen de l'identifiant d'étiquette de celle-ci.

En outre, il peut être prévu de modifier une caractéristique spatiale d'un emplacement, et notamment le frontal, plus connu sous le terme anglais de "facing", qui est la longueur d'étagère visible, face au client, utilisée sur un rayonnage pour la présentation d'un article. En effet, les emplacements du planogramme peuvent avoir des frontaux différents, en fonction notamment des caractéristiques des articles qui y sont placés, et des choix marchands (publicité, stockage en rayon). Ainsi, la possibilité de modifier le frontal (ou "facing"), c'est-à-dire la largeur de présentation d'un emplacement, permet d'améliorer encore la représentativité et la performance du planogramme.

A cet effet, le procédé peut comprendre les étapes selon lesquelles :
- le dispositif de lecture 3 acquiert un identifiant d'étiquette d'une étiquette électronique de gondole,
- une caractéristique de dimension de l'emplacement associé à l'étiquette électronique de gondole est renseignée dans le dispositif de lecture 3,
- ladite caractéristique de dimension de l'emplacement est transmise avec l'identifiant d'étiquette au système informatique de traitement.

Par exemple, le dispositif de lecture 3 peut proposer un menu 40 tel qu'illustré sur la figure 4. Un premier champ 41 correspond au numéro d'étiquette, c'est-à-dire l'identifiant d'étiquette, qui est renseigné par l'opérateur ou par le dispositif de lecture 3 suite à l'acquisition de l'identifiant d'étiquette d'une EEG. Un deuxième champ 42 correspond à caractéristique de dimension de l'emplacement associé à l'EEG identifiée au premier champ 41, en l'occurrence le frontal. L'opérateur peut modifier la valeur de cette caractéristique. Le bouton "Etiquette suivante" 44 sert à valider les caractéristiques associées à l'EEG (numéro d'étiquette, frontal) et permet de passer au renseignement des caractéristiques d'une autre EEG.

D'autres fonctionnalités peuvent être offertes par ce menu 40. Il est par exemple possible de passer à un niveau suivant 43, c'est-à-dire à une étagère de gondole suivante. Il Le bouton 45 permet de supprimer le dernier élément scanné, il s'agit d'un bouton d'annulation. Enfin, le bouton 46 noté "Terminer" permet de valider. Le planogramme est mis à jour à chaque changement de l'agencement des articles dans la surface de vente. Il est donc représentatif de l'agencement réel de chaque surface de vente, et n'est donc plus une vision théorique de ce que devrait être l'agencement de cette surface de vente.

Par ailleurs, les données relatives à l'association entre l'identifiant de l'EEG et la référence d'un article auquel est associée ladite EEG sont utilisées par le système informatique 2 pour transmettre à ladite EEG les données d'affichage en lien avec cet article, par exemple par transmission radio, afin que les informations sur l'article soient affichées par l'EEG. En outre, le système informatique 2 offre également la possibilité de modifier le planogramme manuellement, par exemple en affectant des articles à certains emplacements, notamment pour initialiser le planogramme, et on adapte alors l'association entre un article et l'EEG pour prendre en compte la modification manuelle effectuée.

La connaissance exacte de l'emplacement des produits, que reflète le planogramme, par le biais des emplacements des EEG, apporte plusieurs avantages :
- une localisation du consommateur, via la détermination de l'emplacement de l'EEG dont l'identifiant est communiqué par le consommateur, telle que prévue par la demande WO2013/153290, est plus précise et exacte;
- la possibilité d'informer sur la localisation des articles, le consommateur ou un opérateur de la surface de vente;
- une meilleure gestion des articles mis en vente, aussi bien pour gérer les stocks que pour organiser la politique commerciale,
- une meilleure productivité des opérations réalisées dans la surface de vente du fait d'une connaissance très précise de l'emplacement des produits, notamment pour la préparation de commande, pour un inventaire tournant, ou encore le rangement des articles abandonnés en magasin hors de leur emplacement.

## Revendications

1. Procédé de mise à jour d'un planogramme représentatif d'une surface de vente, le planogramme comprenant des données d'association entre des articles de ladite surface de vente et des emplacements de ladite surface de vente, ladite surface de vente présentant une pluralité d'étiquettes de gondole (10, 11, 12) réparties dans ladite surface de vente, chacune desdites étiquettes de gondole (10, 11, 12) étant associée à un article et étant disposée à proximité d'un emplacement associé audit article, chacune desdites étiquettes de gondole (10, 11, 12) étant munie d'un identifiant d'étiquette qui lui est propre,
une étiquette ajoutée à une gondole étant considérée comme une étiquette à localiser (10), ledit procédé comprenant les étapes selon lesquelles, pour localiser au moins l'étiquette à localiser,
- un dispositif de lecture (3) mobile acquiert (S1) une séquence d'identifiants d'étiquette comprenant l'identifiant d'étiquette de l'étiquette à localiser (10) et comprenant en outre l'identifiant d'étiquette d'une étiquette adjacente (11, 12) par rapport à l'étiquette à localiser (10) dans une direction de défilement des emplacements de la surface de vente, l'étiquette adjacente (11, 12) étant l'étiquette précédente selon la direction de défilement ou étant l'étiquette suivante selon la direction de défilement,
le dispositif de lecture (3) mobile comprenant un organe de mesure de déplacement, l'acquisition (S1) de la séquence d'identifiants comprenant une détermination d'un déplacement du dispositif de lecture (3) mobile entre l'étiquette électronique de gondole dont l'emplacement est connu et l'étiquette électronique de gondole à localiser,
l'emplacement de l'étiquette adjacente (11, 12) étant connu,
- le dispositif de lecture (3) mobile transmet (S2) la séquence d'identifiants d'étiquette à un système informatique (2),
- le système informatique (2) met à jour (S3) le planogramme à partir de la séquence d'identifiants d'étiquettes, en déterminant
• les articles associés aux étiquettes de la séquence d'étiquettes,
• les emplacements respectifs desdits articles, à partir de l'ordre des étiquettes dans la séquence d'étiquettes, un emplacement de l'étiquette à localiser (10) étant déterminé en fonction de l'emplacement connu de l'étiquette adjacente (11, 12) et en fonction d'une distance entre l'étiquette électronique de gondole dont l'emplacement est connu et l'étiquette électronique de gondole à localiser, ladite distance étant déterminée à partir du déplacement du dispositif de lecture (3) mobile.

2. Procédé selon la revendication 1, dans lequel l'acquisition de la séquence d'identifiants d'étiquette comprend le renseignement par un opérateur du dispositif de lecture d'une indication de positionnement relatif, par rapport à l'emplacement de l'étiquette à localiser, de l'étiquette adjacente dont l'emplacement est connu du système informatique, ladite indication de positionnement relatif étant transmise par le dispositif de lecture au système informatique.

3. Procédé selon la revendication 1, dans lequel le sens de défilement des emplacements de la surface de vente est connu, et une indication de positionnement relatif, par rapport à l'emplacement de l'étiquette localisée, de l'étiquette adjacente dont l'emplacement est connu du système informatique, est déduite de l'ordre d'acquisition des identifiants d'étiquette de la séquence d'identifiants d'étiquette.

4. Procédé selon l'une quelconque des revendications précédentes, dans lequel le dispositif de lecture transmet au système informatique des données relatives à l'association entre l'identifiant de l'étiquette électronique à localiser et la référence d'un article auquel est associée ladite étiquette électronique ajoutée.

5. Procédé selon l'une quelconque des revendications précédentes, dans lequel plusieurs étiquettes électroniques de gondole sont à localiser, lesdites étiquettes électroniques de gondole à localiser étant adjacentes les unes aux autres dans une direction de défilement des emplacements de la surface de vente, et l'acquisition de la séquence d'identifiants d'étiquette par le dispositif de lecture comprend l'acquisition des identifiants d'étiquette desdites étiquettes électroniques de gondole à localiser dans l'ordre de leur disposition par rapport à l'étiquette électronique de gondole dont l'emplacement est connu.

6. Procédé selon l'une quelconque des revendications précédentes, dans lequel chaque étiquette électronique de gondole de ladite séquence est munie d'un périphérique radiofréquence et le dispositif de lecture acquiert l'identifiant desdites étiquettes électroniques de gondole en établissant une communication par radiofréquence avec lesdites étiquettes électroniques de gondole.

7. Procédé selon l'une des revendications précédentes, comprenant les étapes selon lesquelles :
- le dispositif de lecture (3) acquiert un identifiant d'étiquette d'une étiquette électronique de gondole,
- une caractéristique de dimension de l'emplacement associé à l'étiquette électronique de gondole est renseignée dans le dispositif de lecture (3),
- ladite caractéristique de dimension de l'emplacement est transmise avec l'identifiant d'étiquette au système informatique de traitement.

8. Produit programme d'ordinateur comprenant des instructions de code de programme pour l'exécution du procédé selon l'une quelconque des revendications précédentes, lorsque ledit programme est exécuté sur un ordinateur.

9. Système de gestion d'un planogramme représentatif d'une surface de vente, le planogramme comprenant des données d'association entre des articles de ladite surface de vente et des emplacements de ladite surface de vente, le système comprenant :
- une pluralité d'étiquettes électroniques de gondole, chacune desdites étiquettes de gondole étant associée à un identifiant d'étiquette qui lui est propre,
- un dispositif de lecture mobile, adapté pour acquérir les identifiants d'étiquette de ladite pluralité d'étiquettes électroniques de gondole et les références des articles associés auxdites étiquettes électroniques de gondole,
- un système informatique, configuré pour stocker le planogramme, et configuré pour recevoir du dispositif de lecture les identifiants d'étiquette acquis par ledit dispositif de lecture,
ledit système de gestion étant adapté pour mettre en œuvre le procédé selon l'une des revendications 1 à 7, et dans lequel
- le dispositif de lecture (3) mobile est configuré pour acquérir une séquence d'identifiants d'étiquette comprenant au moins deux identifiants d'étiquettes dont les étiquettes électroniques de gondoles (10, 11, 12) sont adjacentes dans une direction de défilement des emplacements de la surface de vente, une desdites étiquettes électroniques de gondoles adjacentes étant ladite étiquette électronique de gondole à localiser, et une autre desdites étiquettes électroniques de gondoles adjacentes étant une étiquette électronique de gondole dont l'emplacement est connu,
le dispositif de lecture (3) mobile comprenant un organe de mesure de déplacement, ledit organe étant configuré pour déterminer un déplacement du dispositif de lecture (3) mobile entre l'étiquette électronique de gondole dont l'emplacement est connu et l'étiquette électronique de gondole à localiser,
- le dispositif de lecture (3) mobile est configuré en outre pour transmettre la séquence d'identifiants d'étiquette au système informatique (2),
- le système informatique (2) est configuré pour mettre à jour le planogramme à partir de la séquence d'identifiants d'étiquettes, en déterminant
• les articles associés aux étiquettes de la séquence d'étiquettes,
• les emplacements respectifs desdits articles, à partir de l'ordre des étiquettes dans la séquence d'étiquettes et à partir d'une distance entre l'étiquette électronique de gondole dont l'emplacement est connu et l'étiquette électronique de gondole à localiser, ladite distance étant déterminée à partir du déplacement du dispositif de lecture (3) mobile.

## Patentansprüche

1. Verfahren zur Aktualisierung eines für eine Verkaufsfläche repräsentativen Pianogramms, umfassend Zuordnungsdaten zwischen Artikeln der Verkaufsfläche und Positionen der Verkaufsfläche, wobei die Verkaufsfläche eine Vielzahl von Regaletiketten (10, 11, 12) aufweist, die in der Verkaufsfläche verteilt sind, wobei jedes der Regaletiketten (10, 11, 12) einem Artikel zugeordnet ist und in der Nähe einer Position angeordnet ist, die dem Artikel zugeordnet ist, wobei jedes der Regaletiketten (10, 11, 12) mit einer eigenen Etikettenkennung ausgestattet ist,
wobei ein einem Regal hinzugefügtes Etikett als ein zu lokalisierendes Etikett (10) betrachtet wird, wobei das Verfahren die Schritte umfasst, denen zufolge, um mindestens ein zu lokalisierendes Regaletikett zu lokalisieren,
- eine bewegliche Lesevorrichtung (3) eine Etikettenkennungssequenz erfasst (S1), umfassend die Etikettenkennung des zu lokalisierenden Etiketts (10) und umfassend ferner, in einer Bahnlaufrichtung der Positionen der Verkaufsfläche, die Etikettenkennung eines in Bezug auf das zu lokalisierende Etikett (10) benachbarten Etiketts (11, 12), wobei das benachbarte Etikett (11, 12) das in der Bahnlaufrichtung vorangehende Etikett ist oder das in der Bahnlaufrichtung nachfolgende Etikett ist,
wobei die bewegliche Lesevorrichtung (3) eine Verlagerungsmesseinrichtung umfasst, wobei die Erfassung (S1) der Kennungssequenz eine Bestimmung einer Verlagerung der beweglichen Lesevorrichtung (3) zwischen dem elektronischen Regaletikett, dessen Position bekannt ist, und dem zu lokalisierenden elektronischen Regaletikett umfasst,
wobei die Position des benachbarten Etiketts (11, 12) bekannt ist,
- die bewegliche Lesevorrichtung (3) die Etikettenkennungssequenz an ein IT-System (2) übermittelt (S2),
- das IT-System (2) das Planogramm auf der Basis der Etikettenkennungssequenz aktualisiert (S3), durch Bestimmen
• der den Etiketten der Etikettensequenz zugeordneten Artikel,
• der jeweiligen Positionen der Artikel auf der Basis der Reihenfolge der Etiketten in der Etikettensequenz, wobei eine Position des zu lokalisierenden Etiketts (10) in Abhängigkeit von der bekannten Position des benachbarten Etiketts (11, 12) und in Abhängigkeit von einem Abstand zwischen dem elektronischen Regaletikett, dessen Position bekannt ist, und dem zu lokalisierenden Regaletikett bestimmt wird, wobei der Abstand auf der Basis der Verlagerung der beweglichen Lesevorrichtung (3) bestimmt wird.

2. Verfahren nach Anspruch 1, wobei die Erfassung der Etikettenkennungssequenz die Mitteilung, durch einen Bediener der Lesevorrichtung, einer Angabe bezüglich der relativen Positionierung, in Bezug auf die Position des zu lokalisierenden Etiketts, des benachbarten Etiketts umfasst, dessen Position dem IT-System bekannt ist, wobei die Angabe bezüglich der relativen Positionierung von der Lesevorrichtung an das IT-System übermittelt wird.

3. Verfahren nach Anspruch 1, wobei der Bahnlaufsinn der Positionen der Verkaufsfläche bekannt ist und eine Angabe bezüglich der relativen Positionierung, in Bezug auf die Position des lokalisierten Etiketts, des benachbarten Etiketts, dessen Position dem IT-System bekannt ist, aus der Reihenfolge der Erfassung der Etikettenkennungen der Etikettenkennungssequenz abgeleitet wird.

4. Verfahren nach einem der vorangehenden Ansprüche, wobei die Lesevorrichtung dem IT-System Daten übermittelt, die sich auf die Zuordnung zwischen der Kennung des zu lokalisierenden elektronischen Etiketts und der Referenz eines Artikels, dem das hinzugefügte elektronische Etikett zugeordnet ist, beziehen.

5. Verfahren nach einem der vorangehenden Ansprüche, wobei mehrere elektronische Regaletiketten zu lokalisieren sind, wobei die zu lokalisierenden elektronische Regaletiketten in einer Bahnlaufrichtung der Positionen der Verkaufsfläche zueinander benachbart sind und die Erfassung der Etikettenkennungssequenz durch die Lesevorrichtung die Erfassung der Etikettenkennungen der zu lokalisierenden elektronischen Regaletiketten in der Reihenfolge ihrer Anordnung in Bezug auf das elektronische Regaletikett umfasst, dessen Position bekannt ist.

6. Verfahren nach einem der vorangehenden Ansprüche, wobei jedes elektronische Regaletikett der Sequenz mit einer Funkfrequenz-Peripherie ausgestattet ist und die Lesevorrichtung die Kennung der elektronischen Regaletiketten durch Herstellen einer Funkfrequenzkommunikation mit den elektronischen Regaletiketten erfasst.

7. Verfahren nach einem der vorangehenden Ansprüche, umfassend die Schritte, gemäß denen:
- die Lesevorrichtung (3) eine Etikettenkennung eines elektronischen Regaletiketts erfasst,
- ein Größenmerkmal der dem elektronischen Regaletikett zugeordneten Position der Lesevorrichtung (3) mitgeteilt wird,
- das Größenmerkmal der Position dem IT-Verarbeitungssystem mit der Etikettenkennung übermittelt wird.

8. Rechnerprogrammprodukt, umfassend Programmcodebefehle für die Ausführung des Verfahrens nach einem der vorangehenden Ansprüche, wenn das Programm auf einem Rechner ausgeführt wird.

9. System zur Verwaltung eines für eine Verkaufsfläche repräsentativen Planogramms, wobei das Planogramm Zuordnungsdaten zwischen Artikeln der Verkaufsfläche und Positionen der Verkaufsfläche umfasst, wobei das System umfasst:
- eine Vielzahl elektronischer Regaletiketten, wobei jedes der Regaletiketten einer eigenen Etikettenkennung zugeordnet ist,
- eine bewegliche Lesevorrichtung, die zum Erfassen der Etikettenkennungen der Vielzahl elektronischer Regaletiketten und der Referenzen der Artikel, die den elektronischen Regaletiketten zugeordnet sind, geeignet ist,
- ein IT-System, das zum Speichern des Planogramms ausgelegt ist und zum Empfangen der durch die Lesevorrichtung erfassten Etikettenkennungen von der Lesevorrichtung ausgelegt ist,
wobei das Verwaltungssystem zur Durchführung des Verfahrens nach einem der Ansprüche 1 bis 7 geeignet ist, und wobei
- die bewegliche Lesevorrichtung (3) zum Erfassen einer Etikettenkennungssequenz ausgelegt ist, die mindestens zwei Etikettenkennungen umfasst, deren elektronische Regaletiketten (10, 11, 12) in einer Bahnlaufrichtung der Positionen der Verkaufsfläche benachbart sind, wobei eins der benachbarten elektronischen Regaletiketten das zu lokalisierende elektronische Regaletikett ist und ein anderes der benachbarten elektronischen Regaletiketten ein elektronisches Regaletikett ist, dessen Position bekannt ist,
wobei die bewegliche Lesevorrichtung (3) eine Verlagerungsmesseinrichtung umfasst, wobei die Einrichtung zum Bestimmen einer Verlagerung der beweglichen Lesevorrichtung (3) zwischen dem elektronischen Regaletikett, dessen Position bekannt ist, und dem zu lokalisierenden elektronischen Regaletikett ausgelegt ist,
- die bewegliche Lesevorrichtung (3) ferner zum Übertragen der Etikettenkennungssequenz an das IT-System (2) ausgelegt ist,
- das IT-System (2) zum Aktualisieren des Planogramms auf der Basis der Etikettenkennungssequenz ausgelegt ist, durch Bestimmen
• der den Etiketten der Etikettensequenz zugeordneten Artikel,
• der jeweiligen Positionen der Artikel auf der Basis der Reihenfolge der Etiketten in der Etikettensequenz und auf der Basis eines Abstands zwischen dem elektronischen Regaletikett, dessen Position bekannt ist, und dem zu lokalisierenden Regaletikett, wobei der Abstand auf der Basis der Verlagerung der beweglichen Lesevorrichtung (3) bestimmt wird.

## Claims

1. A method for updating a planogram representative of a retail area, the planogram comprising association data between articles of said retail area and locations of said retail area, said retail area having a plurality of shelf labels (10, 11, 12) distributed in said retail area, each of said shelf labels (10, 11, 12) being associated with an article and being disposed near a location associated with said article, each of said shelf labels (10, 11, 12) being associated with a unique label identifier,
a label added to a shelf being considered as a label to be located (10), said method comprising the steps according to which, to locate at least the label to be located,
- a mobile reading device (3) acquires (S1) a sequence of label identifiers comprising the label identifier of the label to be located (10) and further comprising the label identifier of an adjacent label (11, 12) relative to the label to be located (10) in a scrolling direction of the locations of the retail area, the adjacent label (11, 12) being the previous label along the scrolling direction or being the next label along the scrolling direction,
the mobile reading device (3) comprising a displacement measuring member, the acquisition (S1) of the sequence of identifiers comprising a determination of a displacement of the mobile reading device (3) between the electronic shelf label whereof the location is known and the electronic shelf label to be located,
the location of the adjacent label (11, 12) being known,
- the mobile reading device (3) transmits (S2) the sequence of label identifiers to a computer system (2),
- the computer system (2) updates (S3) the planogram from the sequence of label identifiers, by determining
• the articles associated with the labels of the sequence of labels,
• the respective locations of said articles, from the order of the labels in the sequence of labels, a location of the label to be located (10) being determined based on the known location of the adjacent label (11, 12) and based on a distance between the electronic shelf label whereof the location is known and the electronic shelf label to be located, said distance being determined from the displacement of the mobile reading device (3).

2. The method according to claim 1, wherein the acquisition of the sequence of label identifiers comprises the provision to the computer system, by an operator of the reading device, of an indication of relative positioning of the adjacent label whereof the location is known relative to the location of the label to be located, said indication of relative positioning being transmitted by the reading device to the computer system.

3. The method according to claim 1, wherein the scrolling direction of the locations of the retail area is known, and an indication of relative positioning, relative to the location of the located label, of the adjacent label whereof the location is known to the computer system, is deduced from the acquisition order of the label identifiers of the sequence of label identifiers.

4. The method according to any one of the preceding claims, wherein the reading device transmits to the computer system data relative to the association between the identifier of the electronic label to be located and the reference of an article with which said added electronic label is associated.

5. The method according to any one of the preceding claims, wherein several electronic shelf labels are to be located, wherein said electronic shelf labels to be located are adjacent to each other in a scrolling direction of the locations of the retail area, and the acquisition of the sequence of label identifiers by the reading device comprises the acquisition of the label identifiers of said electronic shelf labels to be located in the order of their arrangement relative to the electronic shelf label whereof the location is known.

6. The method according to any one of the preceding claims, wherein each electronic shelf label of said sequence is associated with a radiofrequency peripheral and the reading device acquires the identifier of said electronic shelf labels by setting up communication via radiofrequency with said electronic shelf labels.

7. The method according to one of the preceding claims, comprising the steps according to which:
- the reading device (3) acquires a label identifier of an electronic shelf label,
- a dimension characteristic of the location associated with the electronic shelf label is entered in the reading device (3),
- said dimension characteristic of the location is transmitted with the label identifier to the computer processing system.

8. A computer program product comprising program code instructions for executing the method according to any one of the preceding claims, when said program is executed on a computer.

9. A system for managing a planogram representative of a retail area, the planogram comprising association data between articles of said retail area and locations of said retail area, the system comprising:
- a plurality of electronic shelf labels, each of said shelf labels being associated with a unique label identifier,
- a mobile reading device adapted to acquire the label identifiers of said plurality of electronic shelf labels and the references of the articles associated with said electronic shelf labels,
- a computer system configured to store the planogram, and configured to receive from the reading device the label identifiers acquired by said reading device,
said management system being adapted to implement the method according to one of claims 1 to 7, and wherein
- the mobile reading device (3) is configured to acquire a sequence of label identifiers comprising at least two label identifiers whereof the electronic shelf labels (10, 11, 12) are adjacent in a scrolling direction of the locations of the retail area, one of said adjacent electronic shelf labels being said electronic shelf label to be located, and another of said adjacent electronic shelf labels being an electronic shelf label whereof the location is known,
the mobile reading device (3) comprising a displacement measuring member, said member being configured to determine a displacement of the mobile reading device (3) between the electronic shelf label whereof the location is known and the electronic shelf label to be located,
- the mobile reading device (3) is further configured to transmit the sequence of label identifiers to the computer system (2),
- the computer system (2) is configured to update the planogram from the sequence of label identifiers, by determining
• the articles associated with the labels of the sequence of labels,
• the respective locations of said articles from the order of the labels in the sequence of labels, and from a distance between the electronic shelf label whereof the location is known and the electronic shelf label to be located, said distance being determined from the displacement of the mobile reading device (3).
